(19) Europäisches Patentamt
European Patent Office
Office européen des brevets

(11) **EP 1 830 204 B1**

(12) **EUROPEAN PATENT SPECIFICATION**


(45) Date of publication and mention of the grant of the patent:
**17.10.2018 Bulletin 2018/42**

(21) Application number: **05819856.5**

(22) Date of filing: **20.12.2005**

(51) Int Cl.:
***G02B 5/18*** (2006.01) ***C08F 220/20*** (2006.01)
***C08F 220/22*** (2006.01) ***C08F 220/38*** (2006.01)
***G02B 27/42*** (2006.01) ***B29D 11/00*** (2006.01)
***G02B 1/04*** (2006.01) ***G02B 3/08*** (2006.01)
*C08F 222/10* (2006.01)

(86) International application number:
**PCT/JP2005/023363**

(87) International publication number:
**WO 2006/068137 (29.06.2006 Gazette 2006/26)**


(54) **CLOSE-BONDED DIFFRACTIVE OPTICAL ELEMENT, OPTICAL MATERIAL USED THEREFOR**

DICHT GEBONDETES BEUGENDES OPTISCHES ELEMENT, DAFÜR VERWENDETES OPTISCHES MATERIAL

ELEMENT OPTIQUE DIFFRACTEUR ETROITEMENT ASSEMBLE, MATERIAU OPTIQUE UTILISE POUR LE PRODUIRE


(84) Designated Contracting States:
**AT BE BG CH CY CZ DE DK EE ES FI FR GB GR HU IE IS IT LI LT LU LV MC NL PL PT RO SE SI SK TR**

(30) Priority: **20.12.2004 JP 2004367608**
**18.08.2005 JP 2005237573**

(43) Date of publication of application:
**05.09.2007 Bulletin 2007/36**



(73) Proprietor: **Nikon Corporation**
**Tokyo 108-6290 (JP)**

(72) Inventor: **MIYAKAWA, Akiko**
**Tokyo 1008331 (JP)**

(74) Representative: **Viering, Jentschura & Partner mbB**
**Patent- und Rechtsanwälte**
**Kennedydamm 55 / Roßstrasse**
**40476 Düsseldorf (DE)**



(56) References cited:
**EP-A1- 1 455 200** **WO-A2-02/31026**
**JP-A- 07 002 939** **JP-A- 09 127 321**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 1 830 204 B1

## Description

### Background of the Invention

The present invention relates to a close-contact multi-layer type diffractive optical element, according to claim 1.

A close-contact multi-layer type diffractive optical element, in which two optical members made of an optical material are in close contact with each other and an interface therebetween constitutes a diffraction grating, has advantages in that usage wavelength can be enlarged, and it is easy to align gratings.

In the close-contact multi-layer type diffractive optical element, as described in Japanese Patent Laid-open Publication No. H09-127322 A, for example, the optical characteristics of two optical members sandwiching a diffractive optical plane are required to have a high-refractive-index and low-dispersion, and a low-refractive-index and high-dispersion, relative to each other. As a general already-existing high-refractive-index and low-dispersion optical material, glass, for example, can be used. Regarding two optical members of the close-contact multi-layer type diffractive optical element, in the case where one of the optical members is made of high-refractive-index and low-dispersion glass, it is required that the other optical member be made of a low-refractive-index and high-dispersion optical material relative to the above glass.

As an optical material used in the optical member of the close-contact multi-layer type diffractive optical element, a resin is suitable since the resin is capable of reducing weight of the element and production of the element can be realized at a low cost with mass-productivity enhanced. In particular, a UV-curable resin is desirable because it has excellent transferability, takes a short time for curing, does not require a heat source, and the like, which can further reduce the cost. However, in a resin conventionally used in an optical field, it is difficult to realize special optical characteristics of high dispersion while having a low refractive index.

Document EP1455200 discloses a close-contact double-layer type diffractive optical element wherein one of the optical members is made of a first resin that is a cured substance of a first resin precursor composition containing a bifunctional acrylate having a fluorene structure or a bifunctional fluorine-containing methacrylate.

### Summary of the Invention

Thus, an object of the present invention is to provide a low-refractive-index and high-dispersion UV-curable resin preferable for an optical material used in a close-contact multi-layer type diffractive optical element, a precursor thereof, a composition containing the precursor, and a close-contact multi-layer type diffractive optical element using these.

In order to achieve the above object, the inventors of the present invention have investigated, with regard to resins having various structures, the relationship between the chemical structure and composition, and between the refractive index and dispersion, and have found that a resin containing fluorine atoms has a small refractive index. The inventors have also found that a resin having an aromatic ring has a high-dispersion. Thus, it is considered that a UV-curable resin having both these structures may be used. However, generally, a resin containing fluorine atoms has poor compatibility with another resin. Therefore, when the resin containing fluorine atoms is used, irregularities in refractive index occur in the resin, and the resin does not become optically uniform, which degrades optical characteristics. For example, the inventors of the present invention attempted to produce an optical element, using trifluoroethyl (meth) acrylate ($CH_2$=CR-COO-$CH_2$-$CF_3$; R = H or $CH_3$) and perfluorooctylethyl(meth)acrylate ($CH_2$=CR-COO-$CH_2CH_2(CF_2)_8F$; R = H or $CH_3$), which is easily available monofunctional fluorine-containing acrylate. However, an optical element having desired optical characteristics was not obtained. Further, the cured substance did not have a desired strength.

The inventors of the present invention studied extensively how to solve the above problem, and found that the use of bifunctional acrylate and/or methacrylate (hereinafter, referred to simply as (meth)acrylate) containing fluorine atoms and bifunctional (meth)acrylate having a fluorenestructure, enables a homogeneous low-refractive-index and high-dispersion resin layer to be formed, thereby achieving the present invention.

The functional mechanism by which the compatibility is enhanced by using bifunctional fluorine-containing (meth)acrylate is not clear. However, having two polar groups (an acryloyl group or a methacryloyl group) rich in $\pi$-electrons in molecules is considered to have some influence on intermolecular force.

Further, a fluorene structure containing a large amount of aromatic rings is effective for realizing high-dispersion characteristics; however, it generally has very high viscosity, and hence has poor workability. However, according to the present invention, by using bifunctional fluorine-containing (meth)acrylate with low viscosity, an excellent resin precursor composition can be realized, which has a high-dispersion while having a low-refractive-index, and further, has high workability due to appropriate viscosity.

An embodiment, not being part of the present invention, provides a resin precursor composition (first resin precursor composition) containing bifunctional fluorine-containing (meth)acrylate, bifunctional (meth)acrylate having a

fluorene structure, and a photopolymerization initiator;

a UV-cured resin obtained by curing the resin precursor composition; and

a close-contact multi-layer type diffractive optical element which comprising two optical members that are in close contact with each other, in which an interface between the optical members constitutes a diffraction grating, and one of the optical members is made of the UV-cured resin (first resin).

It is desirable that the other of the optical members be made of a second resin that is a cured substance of a second resin precursor composition containing an acrylate-terminated oligomer obtained by allowing excess bifunctional acrylate to react with bifunctional thiol and a photopolymerization initiator.

In a further embodiment, not being part of the present invention, there is provided an acrylic resin which is a copolymer having a first repetition unit represented by the following general formula (Chemical Formula 1a) and a second repetition unit represented by the following general formula (Chemical Formula 1b):

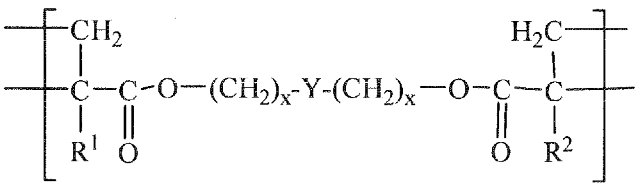

...(1a)

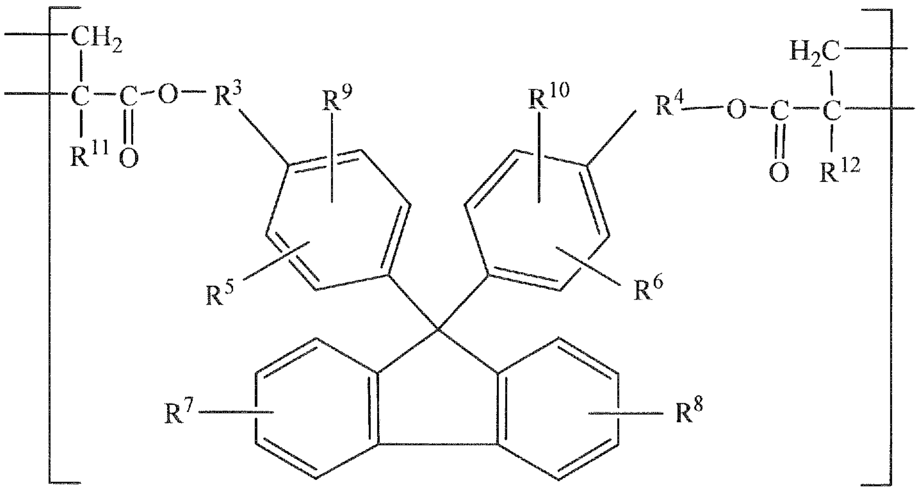

..(1b)

where $R^1$ and $R^2$ each represent a hydrogen atom or a methyl group, $R^3$ and $R^4$ each represent $-((CH_2)_pO)_m-$ or $-(CH_2CH(OH)CH_2O)_m-$ (where m represents an integer of 1 to 3, and p represents an integer of 2 to 4), $R^5$ to $R^{10}$ each represent a hydrogen atom, a fluorine atom, a hydrocarbon group containing 1 to 6 carbon atoms, a phenyl group, a phenyl fluoride group, and a phenyl group with a hydrocarbon group containing 1 to 6 carbon atoms substituted, and $R^{11}$ to $R^{12}$ each represent a hydrogen atom or a methyl group, x represents an integer of 1 to 2, and Y represents a perfluoroalkyl group containing 2 to 12 carbon atoms or $-(CF_2\text{-}O\text{-}CF_2)_z-$, where z represents an integer of 1 to 4.

Further, according to the present invention, there are provided an optical material for a close-contact multi-layer type diffractive optical element in which a refractive index $n_d$ at a wavelength of 587.56 nm of a d-line is 1.54 or less, and an mean dispersion, i.e., a difference ($n_F$-$n_C$) between a refractive index $n_F$ at a wavelength of 486.13 nm of an F-line and a refractive index $n_C$ at a wavelength of 656.27 nm of a C-line is 0.0145 or more, and a resin precursor composition for a close-contact multi-layer type diffractive optical element in which a refractive index $n_d$ of a cured resin is 1.54 or less and an mean dispersion ($n_F$-$n_C$) of the cured resin is 0.0145 or more.

According to the present invention, while a low-refractive-index is realized by using bifunctional fluorine-containing (meth)acrylate to allow fluorine atoms to be present in molecules, and a high-dispersion is realized by using bifunctional (meth)acrylate having a fluorene structure, a homogeneous low-refractive-index and high-dispersion resin layer can be formed. Further, appropriate viscosity of the resin precursor composition can also be provided, so a close-contact multi-layer type diffractive optical element excellent in optical characteristics can be produced with good workability.

Brief Description of the Drawings

In the accompanying drawings:

FIG. 1 is an explanatory view illustrating production steps of a close-contact multi-layer type diffractive optical element of Example 1;
FIG. 2 is an IR spectrum of a resin precursor composition "a";
FIG. 3 is an IR spectrum of a resin precursor composition "b";
FIG. 4 is an IR spectrum of a resin precursor composition "c";
FIG. 5 is an IR spectrum of a cured substance of the resin precursor composition "a";
FIG. 6 is an IR spectrum of a cured substance of the resin precursor composition "b"; and
FIG. 7 is an IR spectrum of a cured substance of the resin precursor composition "c".

Description of the Preferred Embodiments

In a close-contact multi-layer type diffractive optical element, the optical characteristics of optical members sandwiching a diffractive optical plane are required to have a high-refractive-index and low-dispersion, and a low-refractive-index and high-dispersion relative to each other. Herein, as a high-refractive-index and low-dispersion optical material, low-melting glass is used in most cases. In this case, a diffractive plane is molded on glass by glass molding, and a UV-curable resin is stacked on the diffractive plane, and accordingly a close-contact multi-layer type diffractive optical element can be produced. As one of low-melting glass materials used for such an application, there is K-PSK60 (produced by Sumita Optical glass, Inc.).

Assuming that the refractive indexes at a wavelength of $\lambda_0$ of a high-refractive-index and low-dispersion material, and a low-refractive-index and high-dispersion material, are $n_{1(\lambda0)}$ and $n_{2(\lambda0)}$, respectively, a grating height $d_0$ optimized so that an moth-order diffraction efficiency becomes 100% at the wavelength of $\lambda_0$ is expressed as follows.

$$(n_{1(\lambda0)} - n_{2(\lambda0)}) \times d_0 = m_0 \times \lambda_0$$

Specifically, the grating height $d_0$ is inversely proportional to the refractive index difference between the high-refractive-index and low-dispersion material and the low-refractive-index and high-dispersion material.

Further, assuming that a = {(n1-1)d-(n2-1)d}λ, anmth-order diffraction efficiency $\eta_m$ is expressed as follows:

$$\eta_m = \{\sin(a-m)\pi/(a-m)\pi\}^2$$

In general, it is desirable that the diffractive optical element have a low grating height so as to reduce angle of view dependency, and have a high diffraction efficiency over a use wavelength range so as to decrease flare. Thus, when K-PSK60 is combined with the low-refractive-index and high-dispersion resin (nd=1.54, nF - nC = 1.5502 - 1.5367 = 0.0145), it is understood that a close-contact multi-layer type diffractive optical element can be realized, which has a low grating height (11.55 μm), and an excellent diffraction efficiency of 95% or more over a visible light range: 95% at an F-line (wavelength: 486.13 nm), 100% at a d-line (wavelength: 587.56 nm), and 98% at a C-line (wavelength: 656.27 nm).

It is desirable that the refractive index $n_d$ of the first resin in the present invention be 1.54 or less, and the mean dispersion ($n_F$-$n_C$) of the first resin be 0.0145 or more. Further, it is further desirable that the refractive index $n_d$ of the second resin is 1.55 or more, and the mean dispersion ($n_F$-$n_C$) of the second resin is 0.013 or less, because a close-contact multi-layer diffractive optical element using resin in all the optical members having satisfactory optical characteristics of low grating height and high diffraction efficiency, which has not been realized conventionally, can be obtained.

The first resin precursor composition contains bifunctional fluorine-containing (meth)acrylate, bifunctional (meth)acrylate having a fluorene structure, and a photopolymerization initiator. As the content of the bifunctional fluorine-containing (meth)acrylate is increased, the refractive index is decreased, while the dispersion is decreased. On the other hand, when the content of the bifunctional (meth)acrylate having a fluorene structure is increased, the dispersion is increased , while the refractive index is increased. In order to obtain optical characteristics of low-refractive-index and high-dispersion preferable for the close-contact multi-layer type diffractive optical element, it is desirable that the content of bifunctional fluorine-containing (meth) acrylate be 10 to 80 wt%, and the content of bifunctional (meth)acrylate having a fluorene structure be 10 to 80 wt%.

As the bifunctional fluorine-containing (meth)acrylate there is a compound represented by the following structural formula (Chemical Formula 2) .

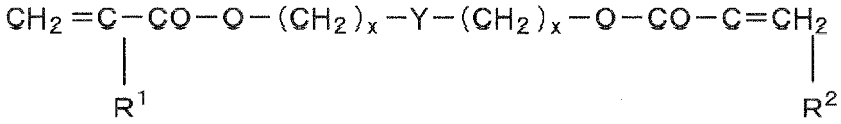

...(2)

where $R^1$ and $R^2$ each represent a hydrogen atom or a methyl group, x represents an integer of 1 to 2, Y represents a perfluoroalkyl group containing 2 to 12 carbon atoms or $-(CF_2-O-CF_2)_z-$, and z represents an integer of 1 to 4.

Specific examples of the fluorine-containing (meth)acrylate to be used include 1,4-di(meth)acryloyloxy-2,2,3,3-tetrafluorobutane, 1,6-di(meth)acryloyloxy-3,3,4,4-tetrafluorohexane, 1,6-di(meth)acryloyloxy-2,2,3,3,4,4,5,5-octafluorohexane, 1,8-di(meth)acryloyloxy-3,3,4,4,5,5,6,6-octafluorooctane, 1,8-di(meth)acryloyloxy-2,2,3,3,4,4,5,5,6,6,7,7-dodecafluoro octane, 1,9-di(meth)acryloyloxy-2,2,3,3,4,4,5,5,6,6,7,7,8,8-tetradec afluorononane, 1,10-di(meth)acryloyloxy-2,2,3,3,4,4,5,5,6,6,7,7,8,8,9,9-hex adecafluorodecane, and 1,12-di(meth)acryloyloxy-2,2,3,3,4,4,5,5,6,6,7,7,8,8,9,9,10, 10,11,11-icosafluorododecane. More specifically, ethyleneoxide-modified bisphenol-F di(meth)acrylate, propyleneoxide-modified bisphenol-F di(meth)acrylate, and the like can be used as fluorine-containing(meth)acrylate.

As the bifunctional fluorine-containing (meth)acrylates, a single compound or a combination of at least two kinds of compounds may be used.

As the bifunctional (meth)acryalte having a fluorene structure, there is a compound represented by the following general formula (Chemical Formula 3), for example. As the bifunctional (meth)acrylates having a fluorene structure, a single compound or a combination of at least two kinds of compounds may be used.

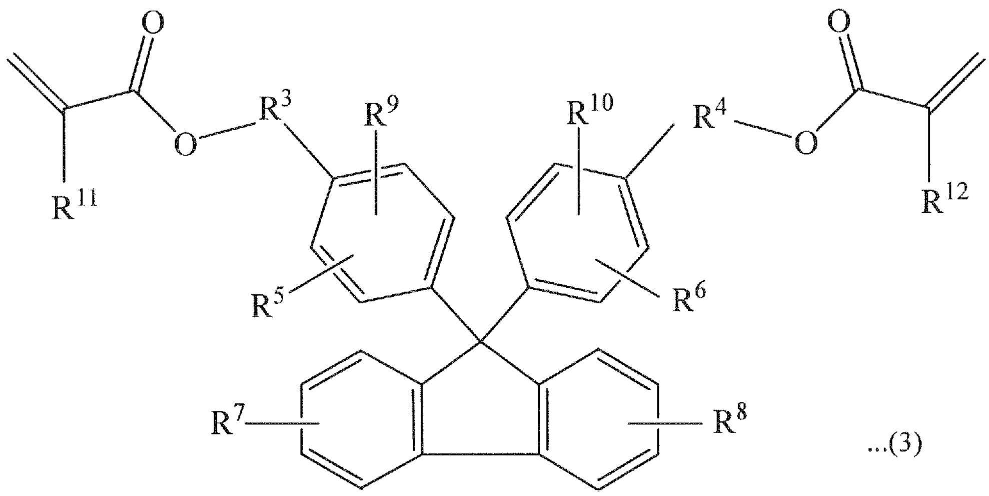

...(3)

where $R^3$ and $R^4$ each represent $-((CH_2)_pO)_m-$ or $-(CH_2CH(OH)CH_2O)_m-$ (where m represents an integer of 1 to 3, and p represents an integer of 2 to 4), and $R^5$ to $R^{10}$ each represent a hydrogen atom, a fluorine atom, a hydrocarbon group containing 1 to 6 carbon atoms, a phenyl group, a phenyl fluoride group, and a phenyl group with a hydrocarbon group containing 1 to 6 carbon atoms substituted, and $R^{11}$ to $R^{12}$ each represent a hydrogen atom or a methyl group).

The first resin precursor composition can contain, as a third component separate from the above-mentioned two acrylates, monofunctional to tetrafunctional (meth)acrylate copolymerizable with the above-mentioned two acrylates, if required. This enables the viscosity to be adjusted, and enhances the transparency of a cured substance.

It is desirable that the monofunctional to tetrafunctional (meth)acryalte to be contained as the third component does not contain sulfur, chlorine, bromine, iodine, nor an alicylic structure, in its molecules. This is because the dispersion is decreased when these atoms or structures are contained. Further, it is desirable that the addition amount of monofunctional to tetrafunctional (meth)acrylate be set to be 40% or less, so as to obtain optical characteristics of low-refractive-index and high-dispersion.

Hereinafter, examples of the monofunctional to tetrafunctional (meth) acrylate that can be contained as the third component will be illustrated. However, the present invention is not limited thereto, and one kind or two or more kinds of (meth)acrylates can be selected appropriately.

Examples of the monofunctionalized (meth)acrylate include methyl(meth)acrylate, ethyl(meth)acrylate, butyl (meth)acrylate, isodecyl(meth)acrylate, lauryl(meth)acrylate, tridecyl(meth)acrylate, cetyl(meth)acrylate, stearyl (meth)acrylate, tert-butyl(meth)acrylate, 2-ethylhexyl (meth)acrylate, 2-hydroxybutyl(meth)acrylate, 2-hydroxyethyl (meth)acrylate, 2-hydroxypropyl(meth)acrylate, 3-methoxybutyl (meth)acrylate, diethylaminoethyl(meth)acrylate, phenoxypolyethylene glycol(meth)acrylate, isostearyl (meth)acrylate, paracumylphenoxyethylene glycol(meth)acrylate,

dimethylaminoethyl(meth)acrylate, 2-ethylhexylcarbitol (meth)acrylate, butoxyethyl(meth)acrylate, ethoxydiethylene glycol(meth)acrylate, lauroxypolyethylene glycol (meth)acrylate, polyethylene glycol(meth)acrylate, polypropylene glycol(meth)acrylate, acryloxypolyethylene glycol(meth)acrylate, stearoxypolyethylene glycol (meth)acrylate, octoxypolyethylene glycol-polypropylene glycol (meth)acrylate, poly(propylene glycol-tetramethylene glycol) (meth)acrylate, poly(ethylene glycol-tetramethylene glycol) (meth)acrylate, poly(ethylene glycol-propylene glycol) (meth)acrylate, polypropylene glycol(meth)acrylate, methoxypolyethylene glycol(meth)acrylate, methoxypolypropylene glycol(meth)acrylate, and benzyl (meth)acrylate.

Examples of the bifunctionalized(meth)acrylate include 2-ethyl, 2-butyl-propanediol(meth)acrylate, 1,3-butylene glycol di(meth)acrylate, 1,6-hexanediol di(meth)acrylate, 1,9-nonanediol di(meth)acrylate, 1,10-decanediol di(meth)acrylate, neopentyl glycol di(meth)acrylate, dipropylene glycol di(meth)acrylate, glycerol di(meth)acrylate, ethyleneoxide-modified neopenthyl glycol di(meth)acrylate, propyleneoxide-modified neopenthyl glycol di(meth)acrylate, ethyleneoxide-modified bisphenol-A di(meth)acrylate, propyleneoxide-modified bisphenol-A di(meth)acrylate, ethyleneoxide · propyleneoxide-modified bisphenol-A di(meth)acrylate, polypropylene glycol(meth)acrylate, and butylethylpropanediol di(meth)acrylate.

Examples of the trifunctionalized (meth)acrylate include tris(acryloxyethyl)isocyanurate, tris(methacryloxyethyl)isocyanurate, epichlorohydrin-modified glycerol triacrylate, ethyleneoxide-modified glycerol triacrylate, propyleneoxide-modified glycerol triacrylate, caprolactone-modified trimethylolpropane triacrylate, ethyleneoxide-modified trimethylolpropane triacrylate, propyleneoxide-modified trimethlolpropane triacrylate, pentaerythritol triacrylate, trimethylolpropane triacrylate, and trimethylolpropane trimethacrylate.

Examples of the tetrafunctionalized (meth) acrylate include pentaerythritol tetraacrylate, dipentaerythritolhydoxy pentaacrylate, and ditrimethylolpropane tetraacrylate.

Among them, as the acrylate to be contained as the third component, phenoxyethylene glycol acrylate, methoxydiethylene glycol methacrylate, benzylmethacrylate, ormethoxytripropylene glycol acrylate, which is monofunctional (meth)acryalte; or neopentyl glycol diacrylate or tripropylene glycol diacrylate, which is bifunctional (meth)acryalte, is preferable.

The photopolymerization initiator contained in the resin precursor composition of the present invention is not particularly limited, and one usually used in a UV-curable resin can be selected appropriately.

The curing step during molding of a resin can be conducted in vacuum so as to prevent air bubbles from being mixed. However, when a portion of the components is evaporated in such a case, the composition becomes nonuniform. Thus, it is preferable that the molecular weights of all the resin precursor compositions (excluding the photopolymerization initiator) be 180 or more.

Example 1

A. Preparation of a low-refractive-index and high-dispersion resin precursor composition

(1) Preparation of resin precursor composition "a"

First, 57 parts by weight of 2,2,3,3,4,4,5,5-octafluorohexane-1,6-diacrylate that is bifunctional fluorine-containing acrylate, 43 parts by weight of 9,9-bis[4-(2-acryloyloxyethoxy)phenyl]fluorene that is bifunctional acrylate having a fluorene structure, and 0.5 wt% of IRGACURE 184 (Ciba Specialty Chemicals) that is a photopolymerization initiator were mixed to obtain a resin precursor composition "a".

(2) Resin precursor composition "b"

First, 53 parts by weight of 2,2,3,3,4,4,5,5-octafluorohexane-1,6-diacrylate that is bifunctional fluorine-containing acrylate, 42 parts by weight of 9,9-bis[4-(2-acryloyloxyethoxy)phenyl]fluorene that is bifunctional acrylate having a fluorene structure, 5 parts by weight of 2-phenoxyethylene glycol acrylate that is monofunctional acrylate, and 0.5 wt% of IRGACURE 184 (Ciba Specialty Chemicals) that is a photopolymerization initiator were mixed to obtain a resin precursor composition "b".

(3) Preparation of resin precursor composition "c"

First, 52 parts by weight of 2,2,3,3,4,4,5,5-octafluorohexane-1,6-diacrylate that is bifunctional fluorine-containing acrylate, 43 parts by weight of 9,9-bis[4-(2-acryloyloxyethoxy)phenyl]fluorene that is bifunctional acrylate having a fluorene structure, 5 parts by weight of methoxypolypropylene glycol acrylate that is monofunctional acrylate, and 0.5 wt% of IRGACURE 184 (Ciba Specialty Chemicals) that is a photopolymerization initiator were mixed to obtain a resin precursor composition "c".

(4) Preparation of a resin

The obtained resin precursor compositions a to c were respectively cured by irradiation of UV-rays at 8000 $mJ/cm^2$, and the refractive indexes thereof were measured. It was found that optical characteristics preferable for a low-refractive-index and high-dispersion optical member of a close-contact multi-layer type diffractive optical element as shown in Table 1 were realized. The cured substances were optically uniform, and defects in outer appearance caused by the nonuniformity of the compositions were not found.

Table 1

| Resin precursor composition | Refractive index $n_d$ (22.5°C) | Mean dispersion $n_F$-$n_c$ (22.5°C) |
|---|---|---|
| a | 1.528 | 0.0150 |
| b | 1.528 | 0.0150 |
| c | 1.528 | 0.0150 |

The resin obtained by curing the resin precursor composition "a" is considered to be a net-shaped random copolymer having two repetition units represented by the following structural formula (Chemical Formula 4).

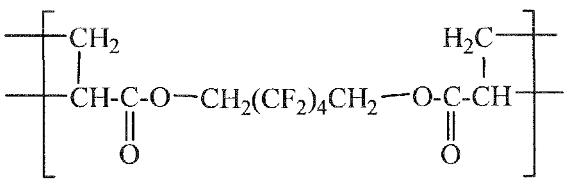

and

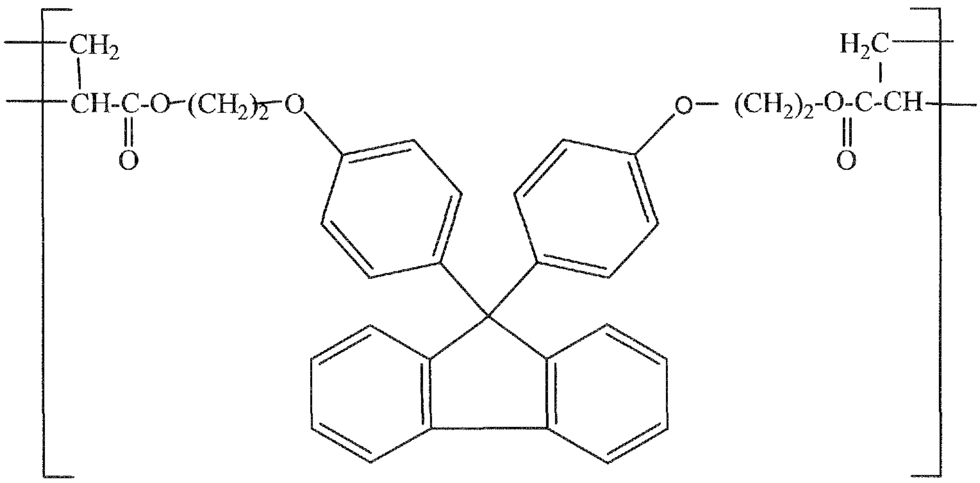

...(4)

The resin obtained by curing the resin precursor composition "b" is considered to be a net-shaped random copolymer further having a repetition unit represented by the following structural formula (Chemical Formula 5) in addition to two repetition units represented by the above-mentioned structural formula (Chemical Formula 4).

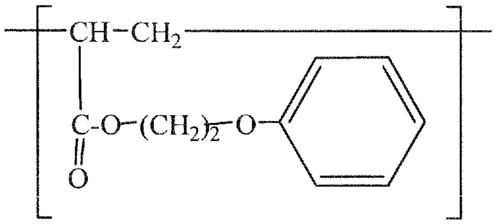

. . . (5)

The resin obtained by curing the resin precursor composition "c" is considered to be a net-shaped random copolymer further having a repetition unit represented by the following structural formula (Chemical Formula 6) in addition to two repetition units represented by the above-mentioned structural formula (Chemical Formula 4).

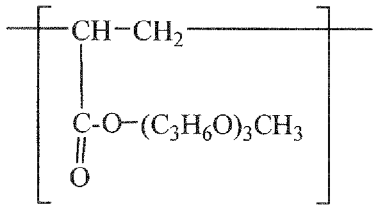

. . . (6)

B. Preparation of a high-refractive-index and low-dispersion resin precursor composition

Tricyclo[5.2.1.$0^{2,6}$]decanedimethanol diacrylate that is bifunctional acrylate and di(2-mercaptoethyl)sulfide that is bifunctional thiol were mixed in a molar ratio of bifunctional acrylate : bifunctional thiol = 3 : 1 or 2.5 : 1. When the mixture became uniform, 0.1 wt% of triethylamine was added as a catalyst, followed by further stirring at room temperature, whereby the viscosity of the mixture increased gradually.

After 4 days, an absorbent TOMITAAD700NS (produced by Tomita Pharmaceutical Co., Ltd.) was added to remove the catalyst, followed by stirring, and the adsorbent was removed by filtration. After that, 0.5 wt% of IRGACURE 184 (Ciba Specialty Chemicals) was added as a photopolymerization initiator, followed by further stirring, whereby UV-curable resin precursor compositions "d" and "e" were obtained. The UV-curable resin precursor compositions had no odor of thiol.

The obtained resin precursor composition was cured by irradiation of UV-rays at 8000 mJ/$cm^2$, and the refractive index thereof was measured. It was found that optical characteristics preferable for a high-refractive-index and low-dispersion optical member of a close-contact multi-layer type diffractive optical element as shown in Table 2 were realized. No degradation in characteristics caused by the optical non-homogeneity was found in the cured substance.

Table 2

| Resin precursor composition | Molar ratio | Refractive index of cured substance $n_d$ (22.5°C) | Mean dispersion of cured substance $n_F$-$n_c$ (22.5°C) |
|---|---|---|---|
| d | 3 : 1 | 1.554 | 0.0110 |
| e | 2.5 : 1 | 1.557 | 0.0110 |

The oligomers thus obtained are considered to be acrylate-terminated oligomers having a structure represented by the following structural formula (Chemical Formula 7). This product contained about 20 mol% of bifunctional acrylate (i.e., unreacted substrate acrylate) represented by the structural formula (Chemical Formula 7) when n = 0.

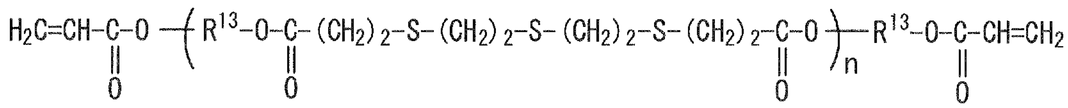

. . . (7)

where $R^{13}$ represents a hydrocarbon group having a tricyclo[5.2.1.$0^{2,6}$] decane skeleton, represented by the following structural formula (Chemical Formula 8), and n represents an integer of 1 to 3.

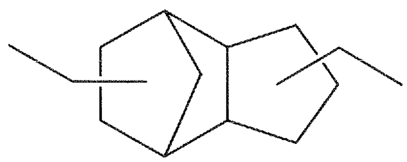

. . . (8)

C. Production of a close-contact multi-layer type diffractive optical element

Using the resin precursor composition "a", "b", or" c" as the low-refractive-index and high-dispersion resin precursor composition obtained in the above step, and using the resin precursor composition "e" as the high-refractive-index and low-dispersion resin precursor composition obtained in the above step, a close-contact multi-layer type diffractive optical element with an outer diameter of 50 mm and a grating height of 20 μm was produced. The grating pitch of the element was set to be 3.5 mm in the vicinity of the center and 0.17 mm in the vicinity of the outer circumference, whereby the pitch was set so as to be smaller toward the outer circumference (periphery).

First, a surface 2 of a glass base material 1, on which a resin layer is to be molded, was treated with silane coupling reagent (Step (a) of FIG. 1). Then, as shown in Step (b) of FIG. 1, the treated surface 2 and a mold 3, having the molding surface in a grating shape as described above, were made to oppose each other, and the above-mentioned low-refractive-index and high-dispersion resin precursor composition 4 was applied therebetween. Then, the low-refractive-index and high-dispersion resin precursor composition 4 was cured by irradiation of UV-rays to obtain an optical member 5 made of low-refractive-index and high-dispersion resin, and thereafter the mold 3 was released (Step (c) of FIG. 1). Subsequently, as shown in Step (d) of FIG. 1, the optical member 5 and a mold 7 having a molding surface in a continuous plane shape or a curved surface shape without a diffraction grating were made to oppose each other, and a high-refractive-index and low-dispersion resin precursor composition 6 obtained in the above-mentioned step was applied therebetween. Then, the high-refractive-index and low-dispersion resin precursor composition 6 was cured by irradiation of UV-rays to obtain an optical member 8 made of a high-refractive-index and low-dispersion resin, and thereafter, the mold 7 was released (Step (e) of FIG. 1).

The obtained close-contact multi-layer type diffractive optical element had satisfactory optical characteristics in the case of using either one of the resin precursor compositions.

The resin constituting the optical member 8 formed in the present example is considered to be a net-shaped copolymer having a repetition unit represented by the following structural formula (Chemical Formula 9).

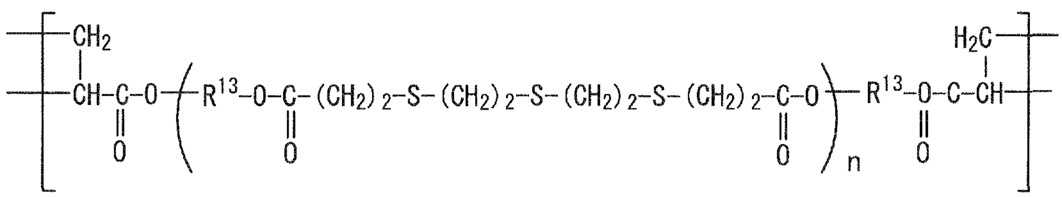

. . . (9)

D. IR spectra of the low-refractive-index and high-dispersion resin precursor compositions a to c and the low-refractive-index and high-dispersion optical members "a" to "c" described in Example 1 were measured.

FIG. 2 shows an IR spectrum of the resin precursor composition "a".

FIG. 3 shows an IR spectrum of the resin precursor composition "b".

FIG. 4 is an IR spectrum of the resin precursor composition "c".

FIG. 5 is an IR spectrum of the cured substance of the resin precursor composition "a".

FIG. 6 is an IR spectrum of the cured substance of the resin precursor composition "b".

FIG. 7 is an IR spectrum of the cured substance of the resin precursor composition "c".

According to the present invention, a close-contact multi-layer type diffractive optical element having a low-refractive-index and high-dispersion resin layer that is optically homogeneous can be produced.

## Claims

1. A close-contact multi-layer type diffractive optical element, comprising:

   two optical members that are in close contact with each other; and
   an interface between the optical members constituting a diffraction grating,
   wherein one of the optical members is made of a first resin that is a cured substance of a first resin precursor composition containing bifunctional fluorine-containing acrylate and/or bifunctional fluorine-containing methacrylate, bifunctional acrylate having a fluorene structure and/or bifunctional methacrylate having a fluorene structure, and a photopolymerization initiator.

2. A close-contact multi-layer type diffractive optical element according to claim 1, wherein the other of the optical members is made of a second resin that is a cured substance of a second resin precursor composition containing an acrylate-terminated oligomer obtained by allowing excess bifunctional acrylate to react with bifunctional thiol, and the photopolymerization initiator.

3. A close-contact multi-layer type diffractive optical element according to any one of claims 1 and 2, wherein:

   a refractive index $n_d$ of the first resin is at most 1.54; and
   an mean dispersion ($n_F$-$n_C$) of the first resin is at least 0.0145.

4. A close-contact multi-layer type diffractive optical element according to any one of claims 2 to 3, wherein:

   a refractive index $n_d$ of the second resin is at least 1.55; and
   an mean dispersion ($n_F$-$n_C$) of the second resin is at most 0.013.

5. A close-contact multi-layer type diffractive optical element according to any one of claims 1 to 4, wherein:

   total content of the bifunctional fluorine-containing acrylate and the bifunctional fluorine-containing methacrylate, of the first resin precursor composition, is 10 to 80 wt%; and
   total content of the bifunctional acrylate having a fluorene structure and the bifunctional methacrylate having a fluorene structure, of the first resin precursor composition, is 10 to 80 wt%.

6. A close-contact multi-layer type diffractive optical element according to any one of claims 1 to 5, wherein the first resin precursor composition further comprises (meth)acrylate copolymerizable with the bifunctional fluorine-containing acrylate and/or the bifunctional fluorine-containing methacrylate, and the bifunctional acrylate having a fluorene structure and/or the bifunctional methacrylate having a fluorene structure.

## Patentansprüche

1. Ein diffraktives optisches Element vom Nahkontakt-Mehrschicht-Typ, umfassend:

   zwei optische Elemente, die in engem Kontakt miteinander stehen; und
   eine Schnittstelle zwischen den optischen Elementen, die ein Beugungsgitter bilden, wobei eines der optischen Elemente aus einem ersten Harz hergestellt wird, das eine gehärtete Substanz einer ersten Harzvorläuferzusammensetzung ist, das ein bifunktionelles Fluor-enthaltendes Acrylat und/oder ein bifunktionelles Fluor-enthaltendes Methacrylat und einen Photopolymerisationsinitiator enthält, wobei das bifunktionelle Acrylat eine Fluorenstruktur aufweist und/oder das bifunktionelle Methacrylat eine Fluorenstruktur aufweist.

2. Ein diffraktives optisches Element vom Nahkontakt-Mehrschicht-Typ gemäß Anspruch 1, wobei das andere der optischen Elemente aus einem zweiten Harz hergestellt ist, das eine gehärtete Substanz einer zweiten Harzvorläuferzusammensetzung ist, die ein Acrylat-terminiertes Oligomer, das erhalten wird, indem überschüssigem bifunktionellem Acrylat ermöglicht wird mit bifunktionellem Thiol zu reagieren, und den Photopolymerisationsinitiator enthält.

3. Ein diffraktives optisches Element vom Nahkontakt-Mehrschicht-Typ gemäß einem der Ansprüche 1 und 2, wobei:

ein Brechungsindex $n_d$ des ersten Harzes höchstens 1,54 beträgt;
und
eine mittlere Dispersion ($n_F$-$n_C$) des ersten Harzes mindestens 0,0145 beträgt.

**4.** Ein diffraktives optisches Element vom Nahkontakt-Mehrschicht-Typ gemäß einem der Ansprüche 2 bis 3, wobei:

ein Brechungsindex $n_d$ des zweiten Harzes mindestens 1,55 beträgt;
und
eine mittlere Dispersion ($n_F$-$n_C$) des zweiten Harzes höchstens 0,013 beträgt.

**5.** Ein diffraktives optisches Element vom Nahkontakt-Mehrschicht-Typ gemäß einem der Ansprüche 1 bis 4, wobei:

der Gesamtgehalt des bifunktionellen Fluor-enthaltenden Acrylats und des bifunktionellen Fluor-enthaltenden Methacrylats der ersten Harzvorläuferzusammensetzung 10 bis 80 Gew.-% beträgt; und
der Gesamtgehalt des bifunktionellen Acrylats, das eine Fluoren-Struktur aufweist und des bifunktionellen Methacrylats, das eine Fluoren-Struktur aufweist, der ersten Harzvorläuferzusammensetzung 10 bis 80 Gew.-% beträgt.

**6.** Ein diffraktives optisches Element vom Nahkontakt-Mehrschicht-Typ gemäß einem der Ansprüche 1 bis 5, wobei die erste Harzvorläuferzusammensetzung ferner (Meth)acrylat, das mit dem bifunktionellen Fluor-enthaltenden Acrylat und/oder dem bifunktionellen Fluor-enthaltenden Methacrylat copolymerisiert ist und das bifunktionelle Acrylat, das eine Fluoren-Struktur aufweist und/oder das bifunktionelle Methacrylat, das eine Fluorenstruktur aufweist, umfasst.

## Revendications

**1.** Elément optique diffractif multicouche étroitement assemblé comprenant :

deux éléments optiques qui sont en contact étroit l'un avec l'autre ; et
une interface entre les éléments optiques constituant un réseau de diffraction,
dans lequel l'un des éléments optiques est fait en une première résine qui est une substance durcie d'une première composition de précurseur de résine contenant un acrylate fluoré bifonctionnel et/ou un méthacrylate fluoré bifonctionnel, un acrylate bifonctionnel ayant une structure de fluorène et/ou un méthacrylate bifonctionnel ayant une structure de fluorène, et un amorceur de photopolymérisation.

**2.** Elément optique diffractif multicouche étroitement assemblé selon la revendication 1, dans lequel l'autre des éléments optiques est fait en une deuxième résine qui est une substance durcie d'une deuxième composition de précurseur de résine contenant un oligomère à terminaison acrylate obtenu par l'opération consistant à laisser un acrylate bifonctionnel en excès réagir avec un thiol bifonctionnel, et l'amorceur de photopolymérisation.

**3.** Elément optique diffractif multicouche étroitement assemblé selon l'une quelconque des revendications 1 et 2, dans lequel :

l'indice de réfraction $n_d$ de la première résine est d'au plus 1,54 ; et
la dispersion moyenne ($n_F$-$n_C$) de la première résine est d'au moins 0,0145.

**4.** Elément optique diffractif multicouche étroitement assemblé selon l'une quelconque des revendications 2 et 3, dans lequel :

l'indice de réfraction $n_d$ de la deuxième résine est d'au plus 1,55 ; et
la dispersion moyenne ($n_F$-$n_C$) de la deuxième résine est d'au moins 0,013.

**5.** Elément optique diffractif multicouche étroitement assemblé selon l'une quelconque des revendications 1 à 4, dans lequel :

la teneur totale en l'acrylate fluoré bifonctionnel et en le méthacrylate fluoré bifonctionnel de la première composition de précurseur de résine est de 10 à 80 % en poids ; et

la teneur totale en l'acrylate bifonctionnel ayant une structure de fluorène et le méthacrylate bifonctionnel ayant une structure de fluorène de la première composition de précurseur de résine est de 10 à 80 % en poids.

**6.** Elément optique diffractif multicouche étroitement assemblé selon l'une quelconque des revendications 1 à 5, dans lequel la première composition de précurseur de résine comprend en outre un (méth)acrylate copolymérisable avec l'acrylate fluoré bifonctionnel et/ou le méthacrylate fluoré bifonctionnel, et l'acrylate bifonctionnel ayant une structure de fluorène et/ou le méthacrylate bifonctionnel ayant une structure de fluorène.

FIG.1

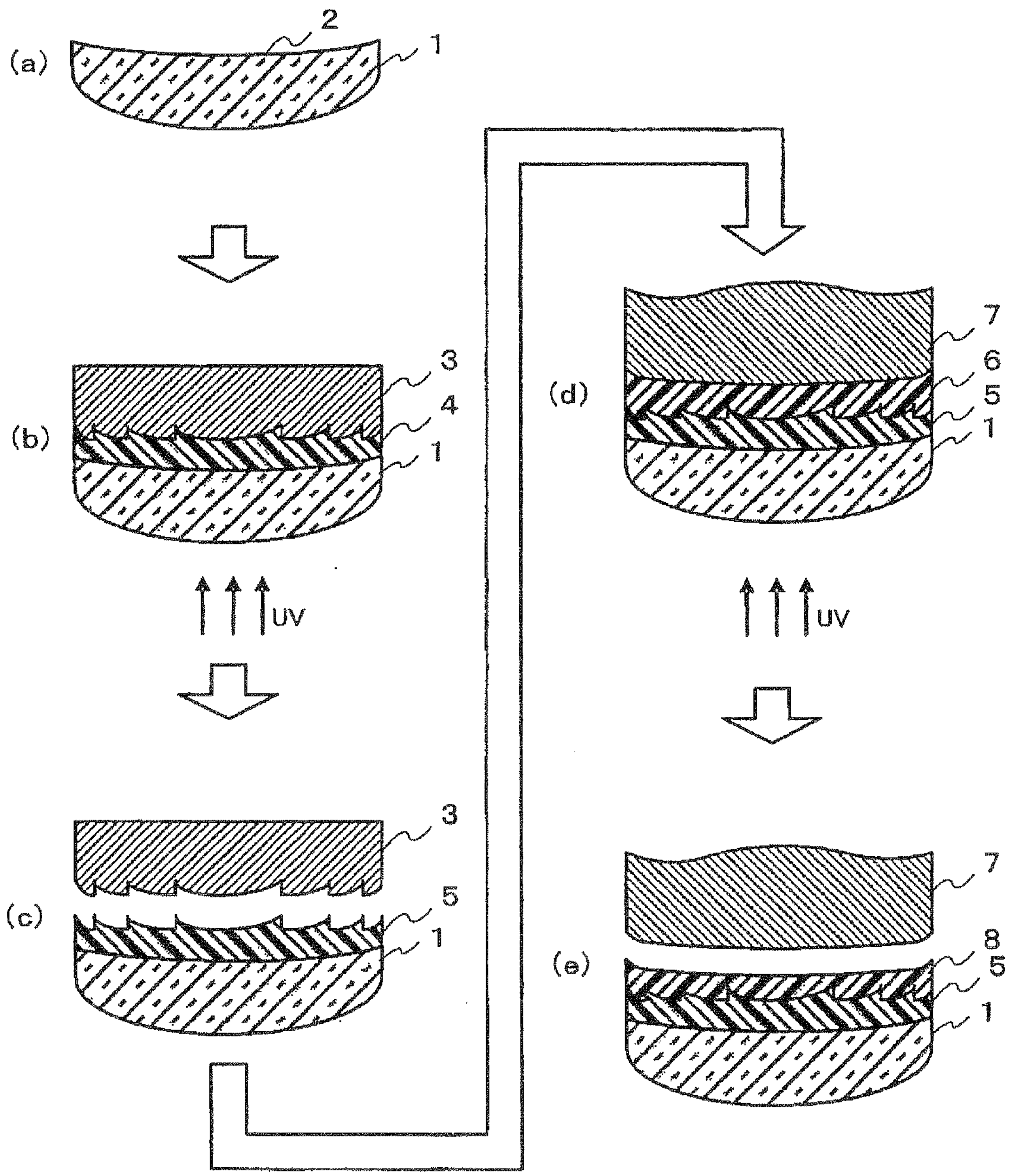

FIG.2

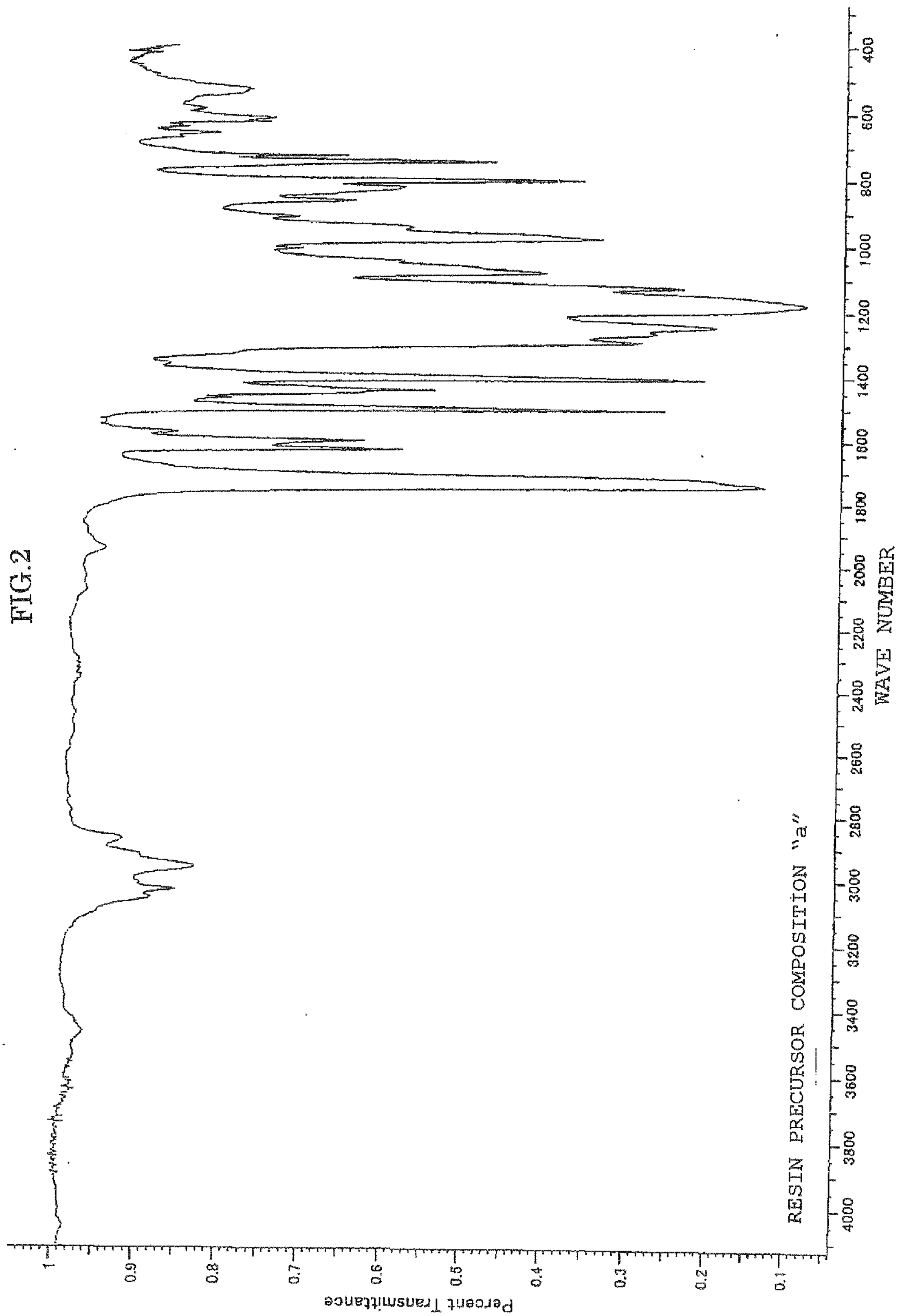
RESIN PRECURSOR COMPOSITION "a"
WAVE NUMBER
4000 3800 3600 3400 3200 3000 2800 2600 2400 2200 2000 1800 1600 1400 1200 1000 800 600 400
Percent Transmittance
1 0.9 0.8 0.7 0.6 0.5 0.4 0.3 0.2 0.1

FIG.3

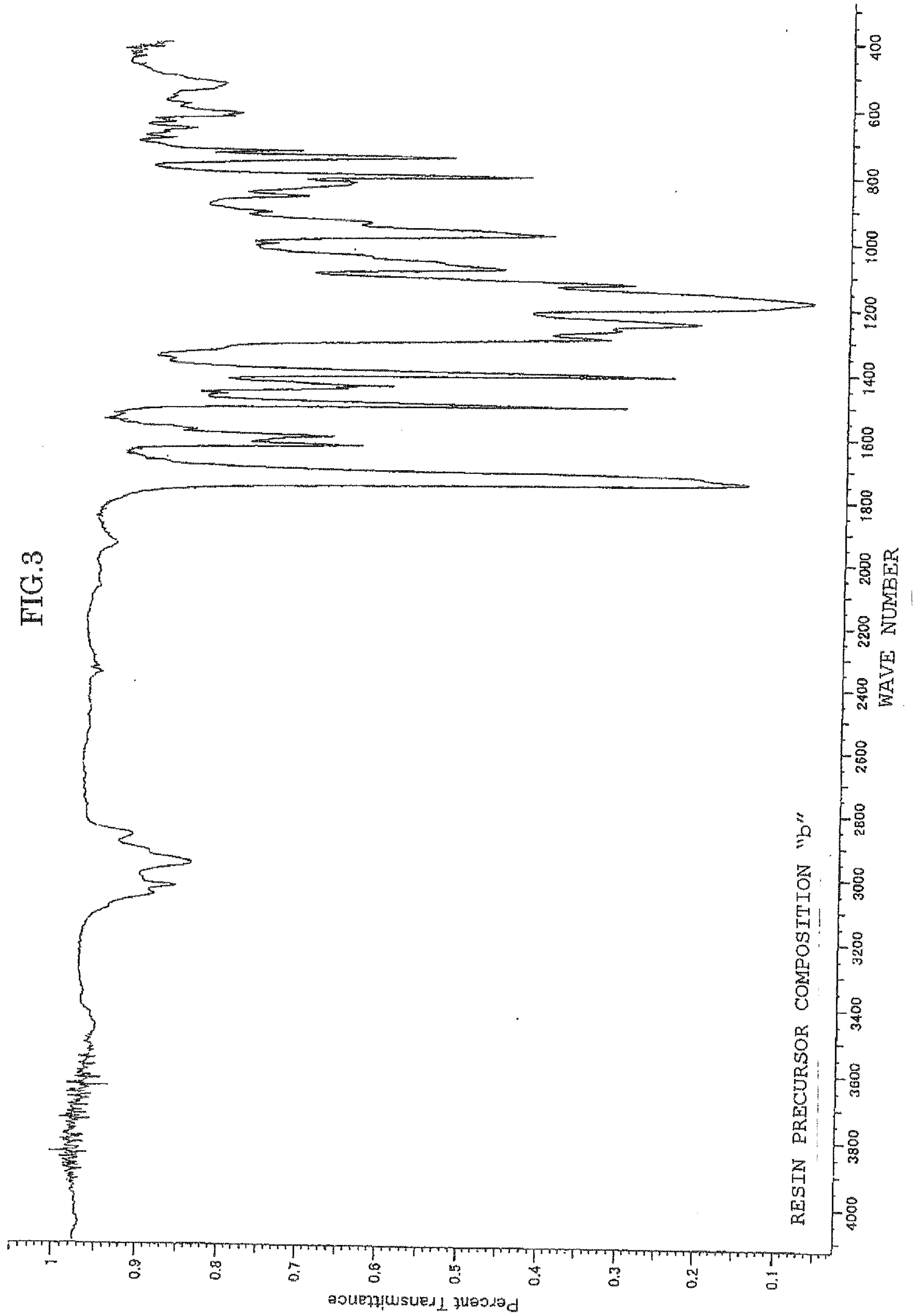
RESIN PRECURSOR COMPOSITION "b"
WAVE NUMBER
Percent Transmittance
4000
3800
3600
3400
3200
3000
2800
2600
2400
2200
2000
1800
1600
1400
1200
1000
800
600
400
1
0.9
0.8
0.7
0.6
0.5
0.4
0.3
0.2
0.1

FIG.4

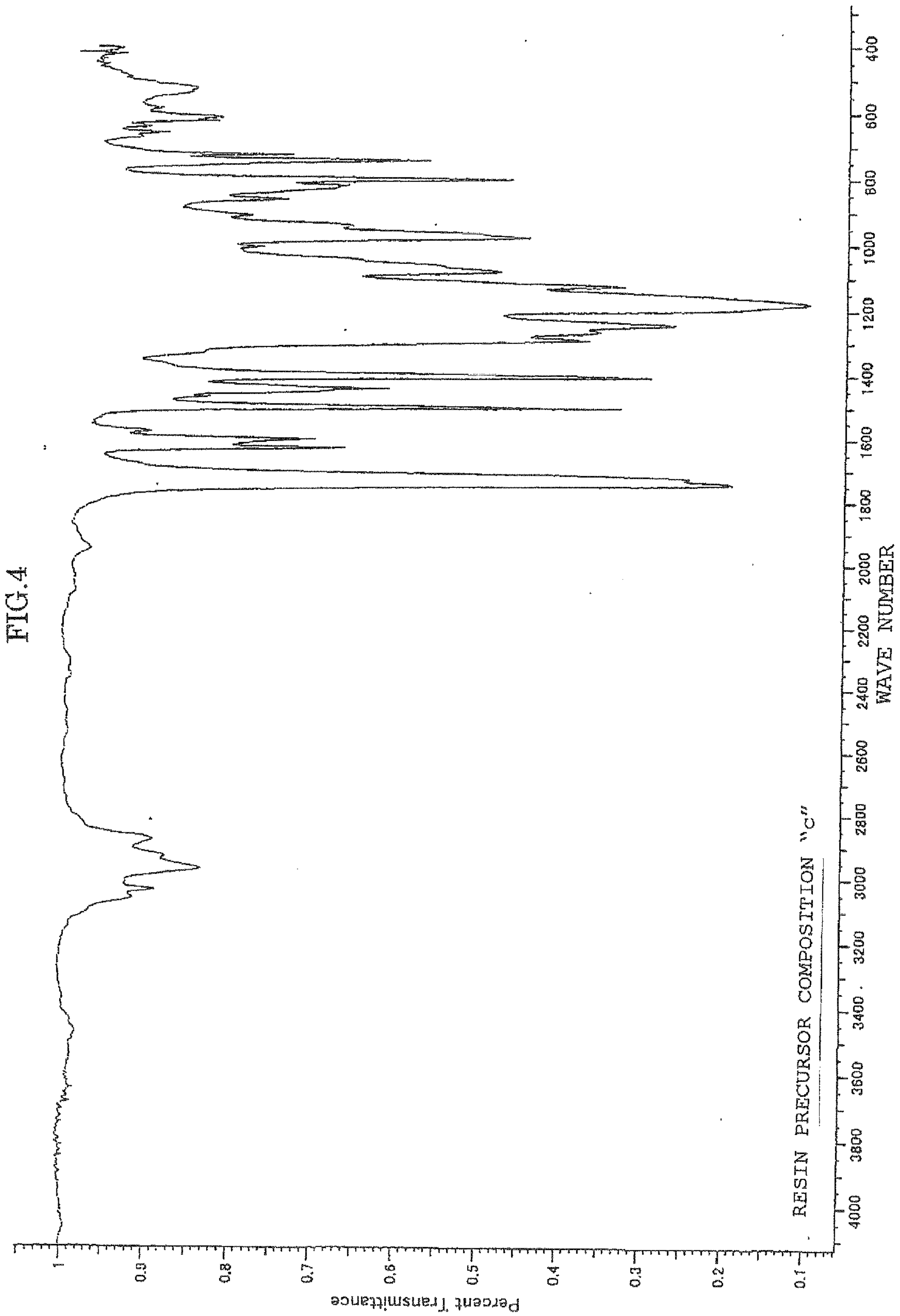
RESIN PRECURSOR COMPOSITION "C"
WAVE NUMBER
Percent Transmittance
4000
3800
3600
3400
3200
3000
2800
2600
2400
2200
2000
1800
1600
1400
1200
1000
800
600
400
1
0.9
0.8
0.7
0.6
0.5
0.4
0.3
0.2
0.1

FIG.5

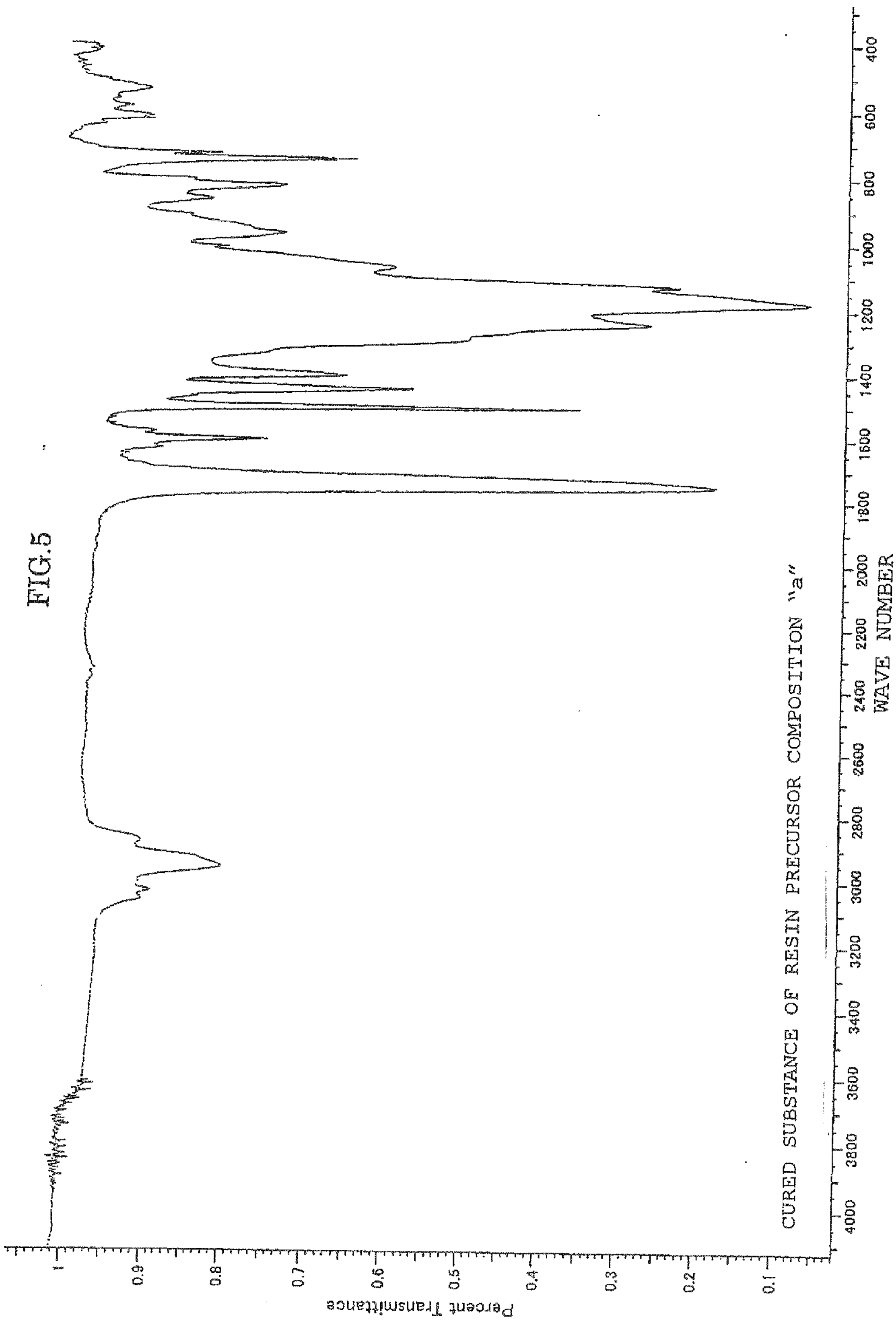
CURED SUBSTANCE OF RESIN PRECURSOR COMPOSITION "a"
WAVE NUMBER
Percent Transmittance

FIG.6

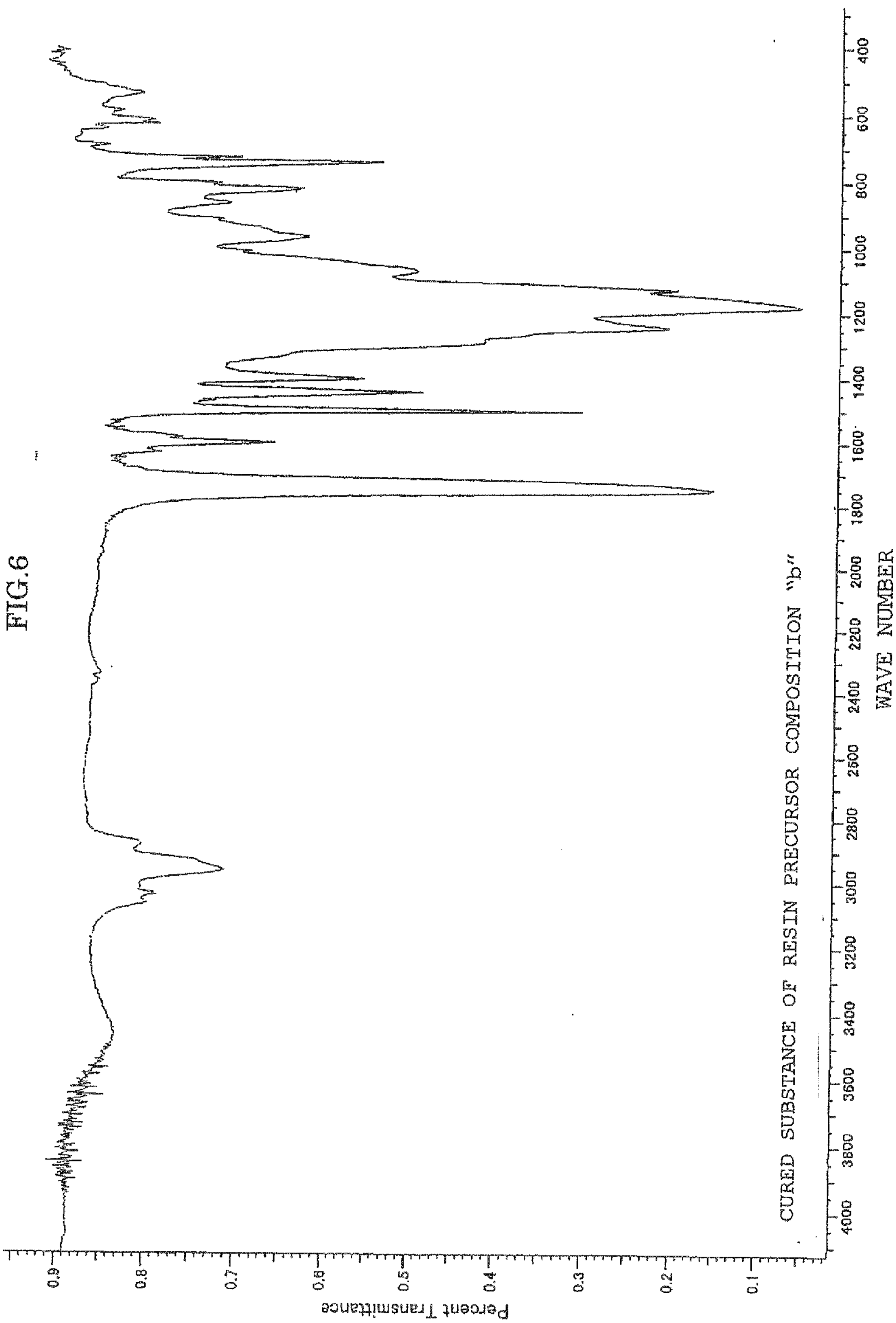
CURED SUBSTANCE OF RESIN PRECURSOR COMPOSITION "b"
WAVE NUMBER
Percent Transmittance
4000 3800 3600 3400 3200 3000 2800 2600 2400 2200 2000 1800 1600 1400 1200 1000 800 600 400
0.9 0.8 0.7 0.6 0.5 0.4 0.3 0.2 0.1

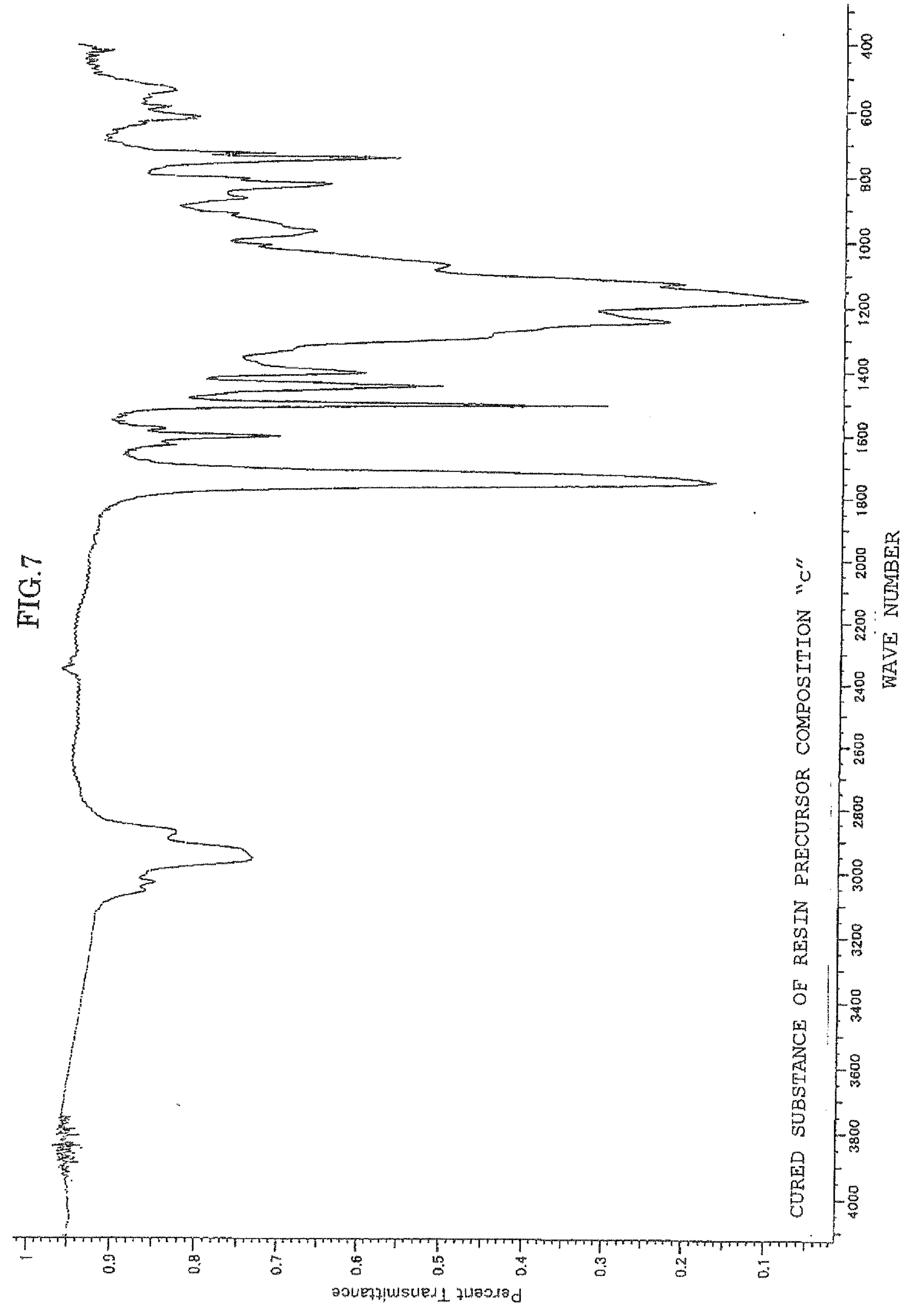
CURED SUBSTANCE OF RESIN PRECURSOR COMPOSITION "c"
WAVE NUMBER
4000
3800
3600
3400
3200
3000
2800
2600
2400
2200
2000
1800
1600
1400
1200
1000
800
600
400
Percent Transmittance
1
0.9
0.8
0.7
0.6
0.5
0.4
0.3
0.2
0.1

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H09127322 A
- EP 1455200 A